# FASCICULE DE BREVET EUROPEEN

(11) **EP 2 939 805 B1**
(45) Date de publication et mention de la délivrance du brevet: **24.08.2016**
(21) Numéro de dépôt: 15158857.1
(22) Date de dépôt: 12.03.2015
(51) Int. Cl.: B27B 5/22, B23D 47/04

(54) **SCIE CIRCULAIRE À CHEVALET POUR TRONÇONNER DES BUCHES DE BOIS**
KREISSÄGE MIT LAGERBOCK ZUM SPALTEN VON HOLZSCHEITEN
CIRCULAR SAW WITH BENCH FOR CUTTING TIMBER LOGS

(30) Priorité: 30.04.2014 FR 1453920
(43) Date de publication de la demande: 04.11.2015
(73) Titulaire: AMR Société par actions simplifiées (SAS), 67390 Elsenheim (FR)
(72) Inventeur: Bechtel, Michel, 67600 BINDERNHEIM (FR); Heissler, Robert, 68320 JEBSHEIM (FR); Kraus, Benjamin, 67115 PLOBSHEIM (FR)
(74) Mandataire: Koelbel, Caroline

(56) Documents cités:
- EP-A1- 2 390 071
- EP-A1- 2 705 937
- EP-A1- 2 839 938
- DE-U1- 29 607 119
- FR-A1- 2 540 030

## Description

### Domaine technique :

La présente invention concerne une scie circulaire à chevalet pour tronçonner des bûches de bois comportant un châssis comportant une lame de scie circulaire et un chevalet comportant une zone de réception et une zone d'évacuation respectivement en amont et en aval de ladite lame de scie, ladite lame de scie étant perpendiculaire audit chevalet, et ledit chevalet étant monté oscillant par rapport audit châssis autour d'un axe de pivotement pour pivoter alternativement entre au moins une position de repos dans laquelle il est éloigné de ladite lame de scie et une position de coupe dans laquelle il est rapproché de ladite lame de scie.

### Technique antérieure :

Une telle scie circulaire est connue du document FR 2540030A1.

Une scie circulaire à chevalet est, de manière générale, composée d'un châssis sur lequel est fixée une lame de scie circulaire, et d'un chevalet mobile, monté pivotant sur ce châssis autour d'un axe de pivotement parallèle à l'axe de rotation de la scie. Le chevalet est horizontal et permet de recevoir la bûche de bois à couper pour la basculer vers la lame de scie circulaire verticale. En effet, le chevalet peut osciller ou pivoter alternativement entre une position de repos, dans laquelle il est éloigné de la lame de scie, et une position de coupe, dans laquelle il est rapproché de la lame de scie. Le chevalet décrit ainsi un mouvement de rotation alternatif autour de l'axe de pivotement dans deux sens opposés de rotations appelés premier sens de rotation et second sens de rotation. Dans un premier temps, le chevalet oscille dans le premier sens de rotation de la position de repos vers la position de coupe et dans un second temps le chevalet oscille dans le second sens de rotation de la position de coupe vers la position de repos. En position de repos du chevalet, la bûche est disposée sur le chevalet et éloignée de la lame de scie, et en position de coupe la bûche disposée sur le chevalet est rapprochée de la lame de scie pour être coupée lors du basculement du chevalet dans le premier sens de rotation. Après la coupe, une partie de la bûche reste dans le chevalet et l'autre partie de la bûche coupée est évacuée. La partie de bûche restante peut alors être, soit évacuée, soit redécoupée. Dans ce dernier cas, le chevalet est ramené en position de repos en basculant le chevalet dans le second sens de rotation et la buche est repositionnée sur le chevalet par un mouvement manuel de translation le long du chevalet. L'opérateur doit par conséquent effectuer plusieurs opérations manuelles successives, à savoir : positionner la bûche sur le chevalet, basculer le chevalet en position de coupe dans le premier sens de rotation, évacuer la buche, basculer le chevalet en position de repos dans le second sens de rotation et repositionner la partie de bûche restante sur le chevalet, puis réitérer les opérations précitées. Ces différentes opérations manuelles présentent des risques pour la sécurité de l'opérateur travaillant à proximité d'une lame de scie rotative et ralentissent la cadence de coupe.

Pour répondre à la réglementation en vigueur en matière de sécurité, on connaît de la publication FR 2 540 030 A1, une scie circulaire à chevalet oscillant comportant un carter permettant d'entourer la lame de scie et une griffe montée sur le chevalet permettant de maintenir la bûche lors de la coupe. Il en résulte que l'opérateur est protégé de la lame de scie et n'a plus besoin de tenir manuellement la bûche lors de la coupe.

On connait également de la publication EP 2 390 071 A1, une scie circulaire à chevalet oscillant avec un clapet de sécurité disposé au-dessus du chevalet. Il permet de ne pas avoir accès à la bûche ni à la lame de scie lors de l'opération de coupe. Lorsque le chevalet est basculé pour couper la buche, le clapet de sécurité se rabat. En outre, la scie comporte un bras permettant de maintenir la bûche lors de la coupe.

Si de telles scies circulaires à chevalet oscillant répondent en partie aux impératifs de sécurité imposés par la réglementation en vigueur, elles ne permettent toutefois pas d'améliorer la cadence de coupe. En outre, elles présentent l'inconvénient de nécessiter une intervention humaine à chaque opération, ce qui accroît les risques d'accidents, notamment, lors des opérations de positionnement et/ou de repositionnement de la buche et d'évacuation de la buche.

### Exposé de l'invention :

La présente invention vise à pallier ces inconvénients en proposant une scie circulaire à chevalet sécurisée, permettant d'augmenter la cadence de coupe, tout en prévenant les risques d'accidents et en améliorant considérablement l'ergonomie du poste de travail.

Dans ce but, l'invention concerne une scie circulaire à chevalet du genre indiqué en préambule, caractérisée en ce que ledit chevalet est incliné d'un premier angle A1 par rapport à l'horizontale de sorte que le niveau de la zone d'évacuation soit inférieur au niveau de la zone de réception, en ce que ladite lame de scie est inclinée d'un second angle A2 par rapport à la verticale, les premier et second angles A1 et A2 étant égaux et dans le même sens, en ce que ladite scie circulaire à chevalet comporte une butée réglable disposée sur ledit châssis en aval dudit chevalet et agencée pour retenir les buches dans le chevalet lorsqu'il est en position de repos, et en ce que ladite scie circulaire à chevalet comporte un organe de blocage mobile par rapport audit chevalet agencé pour maintenir les bûches dans le chevalet lorsqu'il est en position de coupe.

De manière avantageuse, ledit premier ou second angle est compris entre 35 degrés et 45 degrés, de préférence égal à 40 degrés.

De manière préférentielle, la butée réglable comporte une partie fixe solidaire du châssis et une partie mobile en translation par rapport à la partie fixe et formant butée pour ajuster la position longitudinale de ladite butée réglable en fonction de la longueur de coupe souhaitée.

Dans ce cas, la partie fixe comporte une seconde crémaillère munie d'une pluralité de crans et la partie mobile comporte une plaque formant butée et une première crémaillère munie d'une pluralité de crans, la dite partie mobile étant munie d'un levier pivotant entre une position verrouillée dans laquelle le levier engrène les crans des première et seconde crémaillères bloquant la butée dans une position longitudinale, et une position déverrouillée dans laquelle le levier dégage les crans des première et seconde crémaillères autorisant le déplacement de la butée.

De manière préférentielle, l'organe de blocage comporte un bras pivotant dont l'extrémité comporte des dents et est indépendant du chevalet et est disposé dans la zone de réception du chevalet.

De préférence, la scie comporte un guide longitudinal disposé dans le prolongement longitudinal de la zone d'évacuation du chevalet et ajustable en longueur en fonction de la longueur de coupe souhaitée.

Dans ce cas, le guide longitudinal comporte une partie fixe solidaire du châssis et une partie mobile pouvant coulisser dans la partie fixe et reliées entre elles par une molette de réglage.

Dans une variante de réalisation, la scie comporte au moins un convoyeur d'évacuation disposé en aval de la zone d'évacuation du chevalet.

De préférence, le chevalet comporte un capot supérieur fixe.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente en perspective la scie circulaire à chevalet selon la présente invention,
- les figures 2A et 2B sont des vues de côté de la scie circulaire à chevalet de la figure 1 montrant le guide latéral respectivement rentré et sorti,
- les figures 3A et 3B sont des vues en perspective d'une portion de la scie circulaire à chevalet de la figure 1 montrant la butée réglable respectivement déverrouillée et verrouillée,
- les figures 4A, 4B, et 4C sont des vues de face d'une portion de la scie circulaire à chevalet de la figure 1, respectivement en position de repos, en position de pivotement, et en positon de coupe,
- les figures 5A et 5B sont des vues en perspective de la scie circulaire à chevalet de la figure 1 comportant un tapis d'évacuation, respectivement rentré et sorti, selon une variante de l'invention.

### Illustrations de l'invention et meilleure manière de la réaliser :

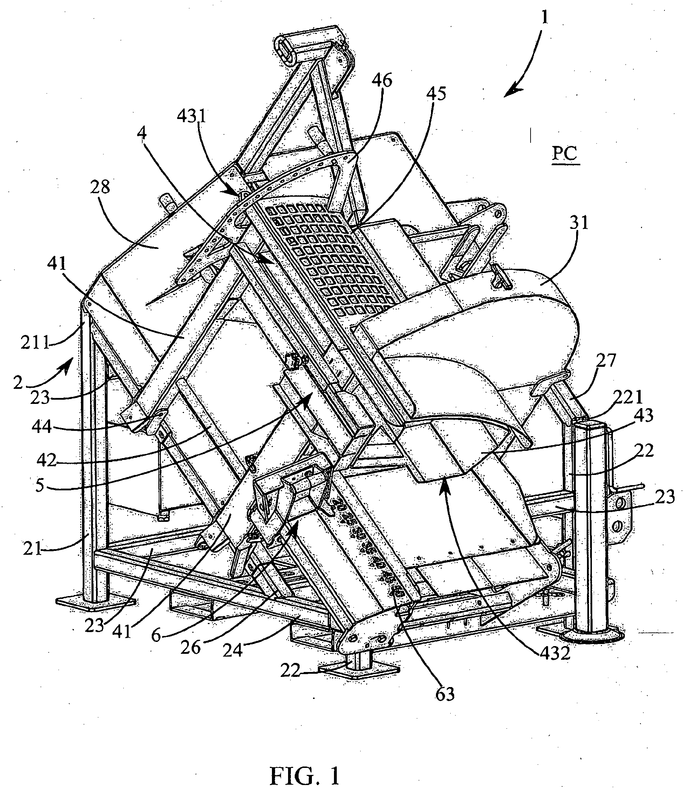

En référence aux figures 1 à 5, la présente invention concerne une scie circulaire à chevalet 1, nommée dans la présente description « scie 1». La scie 1 comporte un châssis 2 sur lequel est fixée une lame de scie 3 circulaire et sur lequel un chevalet 4 est monté pivotant par rapport au châssis 2 et à la lame de scie 3.

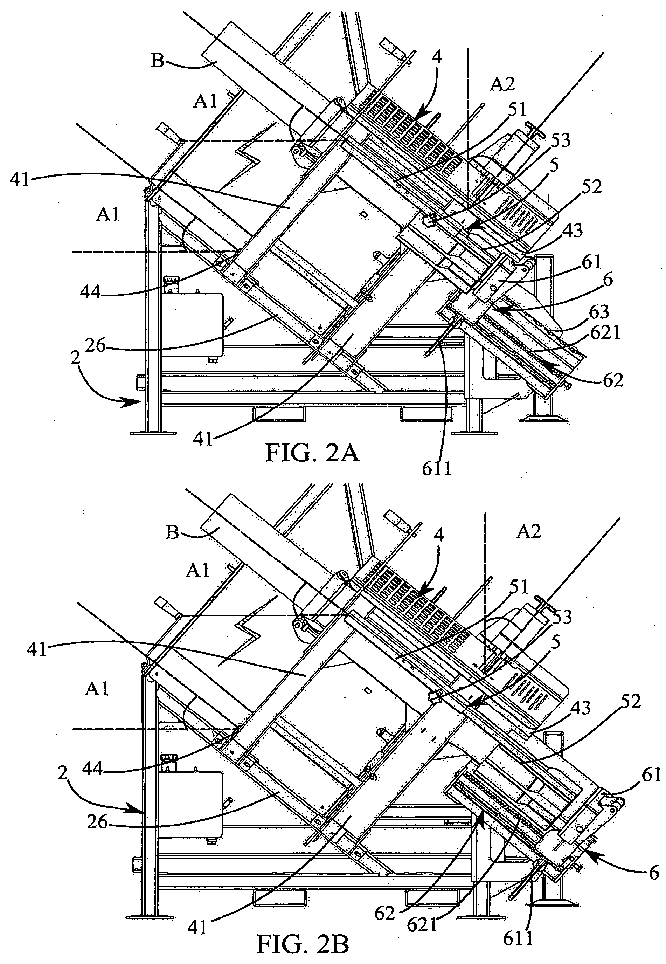

En référence à la figure 1, le châssis 2 peut être réalisé en profilés mécanosoudés et est dans l'exemple illustré formé par deux montants avant 21 et deux montants arrière 22. Les montants avant 21 et les montants arrière 22 sont respectivement reliés entre eux par deux traverses transversales 23 et une traverse transversale 23. Les montants avant 21 et les montants arrière 22 sont chacun reliés par des traverses latérales 24. La hauteur des montants avant 21 est supérieure à la hauteur des montants arrière 22. D'une part, l'extrémité supérieure 211 du montant avant 21 est reliée à une traverse latérale 24 par une première traverse diagonale 26. D'autre part, l'extrémité supérieure 211 de l'autre montant avant 21 est reliée à l'extrémité supérieure 221 du montant avant 22 par une seconde traverse diagonale 27. La première traverse diagonale 26 permet de recevoir le chevalet 4 et d'incliner l'axe de pivotement 44 du chevalet 4 d'un angle A1 par rapport à l'horizontale, comme l'illustre la figure 2A. En outre, la seconde traverse diagonale 27 permet de recevoir le capot 31 de lame de scie 3. Le châssis 2 comporte également la lame de scie 3 est montée sur un axe de rotation (non représenté) et est inclinée d'un angle A2 par rapport à la verticale. Le châssis 2 est protégé par un carter 28 dans lequel est disposé le moteur électrique de la scie 1 permettant d'entrainer la lame de scie 3. Bien entendu, le châssis 2 peut avoir toute autre structure et configuration adaptées.

Dans l'exemple illustré aux figures 1, 2A et 2B, le chevalet 4 comporte deux montants 41 parallèles, reliés entre eux par une traverse 42, et supportant un berceau 43 dont la partie avant forme une zone de réception 431 et la partie arrière forme une zone d'évacuation 432. Chaque montant 41 est monté pivotant sur le châssis 2 au niveau de la première traverse diagonale 26 au moyen d'un axe de pivotement 44 porté par un étrier, l'axe de pivotement 44 étant incliné par rapport à l'horizontale d'un premier angle A1. Toutefois, cette variante de réalisation du chevalet n'est pas limitative et la présente invention s'étend à toutes autres formes de chevalet similaires. De cette façon, le chevalet 4 peut être pivoté alternativement par rapport au châssis 2 et à la lame de scie 3 entre une position de repos PR et une position de coupe PC. En particulier, le chevalet 4 est ainsi agencé pour être mobile en rotation autour de l'axe de pivotement 44 de façon alternative dans deux sens de rotation opposés appelés premier sens de rotation et second sens de rotation. D'une part, le chevalet 4 peut osciller dans le premier sens de rotation de la position de repos PR vers la position de coupe PC pour couper les bûches B et d'autre part le chevalet peut osciller dans le second sens de rotation de la position de coupe PC vers la position de repos PR pour revenir dans sa position de repos PR. En outre, il résulte de cette configuration que le chevalet 4 est incliné par rapport à l'horizontale d'un premier angle A1. En particulier, le chevalet 4 est incliné vers le bas, et par conséquent le niveau de la zone de réception 431 est supérieur au niveau de la zone d'évacuation 432 du chevalet 4. Il en résulte que le berceau 43 du chevalet 4 forme une pente descendante. Cette configuration permet un déplacement automatique des bûches B par gravité le long du berceau 43 du chevalet 4. Bien entendu, l'invention n'est pas limitée à ce mode de réalisation et s'étend par exemple à un axe de pivotement du chevalet 4 horizontal et à un berceau 43 incliné. Le premier angle A1 est égal au deuxième angle A2, ce qui permet d'obtenir une coupe droite des bûches B. Par exemple, le premier ou le deuxième angle A1, A2 pourra être compris entre 35 degrés et 45 degrés, de préférence être égal à 40 degrés. La figure 1 représente le chevalet 4 dans la position de coupe PC dans laquelle les montants 41 du chevalet 4 sont sensiblement dans un plan vertical et le chevalet 4 est rapproché de la lame de scie 3 protégée par le capot 31. La partie supérieure du berceau 43 du chevalet 4 est recouverte par un capot supérieur 45 pour éviter l'accès à la lame de scie 3. Une poignée 46 est disposée au dessus du capot supérieur 45 et permet de faciliter le pivotement du chevalet 4.

Comme l'illustre la figure 1, la scie 1 est également munie dans la zone d'évacuation 432 d'un guide longitudinal 5 permettant de prolonger la longueur du berceau 43 du chevalet 4, et d'une butée réglable 6 disposée sur le châssis 2.

Le guide longitudinal 5 se compose de deux parties 51, 52 télescopiques, reliées entre elles par une molette de réglage 53, comme l'illustre également les figures 2A et 2B. Bien entendu tout autre moyen similaire peut remplacer la molette réglable 53, sans que l'on s'éloigne de la présente invention. La partie fixe 51 est fixée au chevalet 4 perpendiculairement aux deux montants 41 et la partie mobile 52 peut coulisser dans la partie fixe 51. Il en résulte que la longueur du guide longitudinal 5 est réglable ce qui permet de prolonger le berceau 43 du chevalet 4. Le guide longitudinal 5 permet ainsi de maintenir et de guider les bûches B lorsque le chevalet 4 est en position de repos PR jusqu'à la butée réglable 6 disposée sur le châssis 2 et ce quelle que soit la longueur de la bûche B. On évite ainsi que les bûches B ne chutent dans l'intervalle entre la zone d'évacuation 432 et la butée réglable 6 lorsque le chevalet 4 est en position de repos PR.

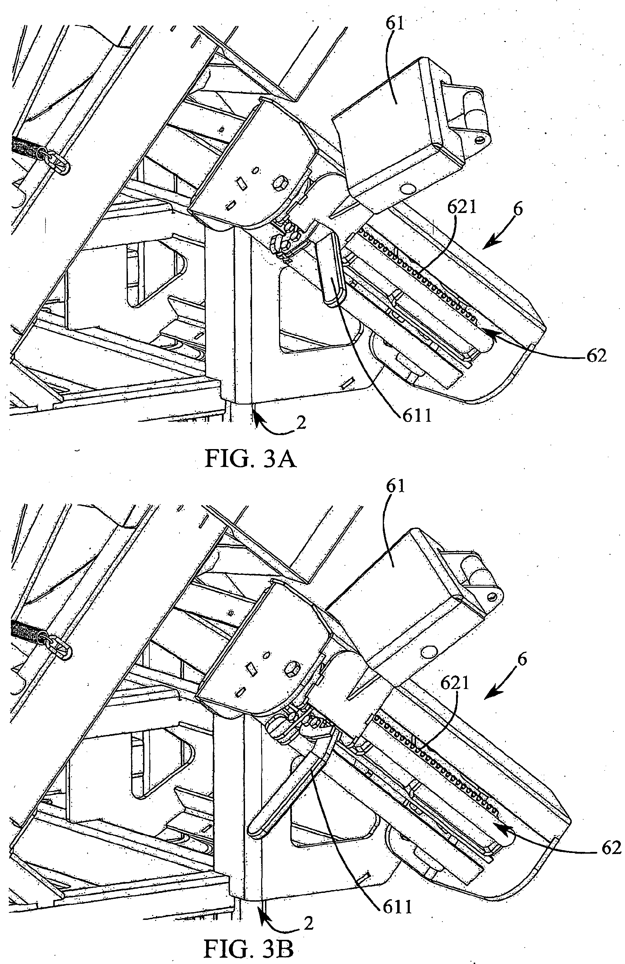

La butée réglable 6 est disposée sur le châssis 2 en aval du chevalet 4 comme le représente la figure 1. Elle est disposée en vis-à-vis de la zone d'évacuation 432 dudit chevalet 4 en positon de repos PR, perpendiculairement au berceau 43 pour retenir les buches B et éviter leur chute par gravité. En référence aux figures 3A et 3B, elle comporte une partie mobile par rapport à une partie fixe disposée sur le châssis 2. La partie mobile comporte une plaque 61 formant une butée et couplée à une première crémaillère (non représentée) associée à un levier pivotant 611. La partie fixe est formée par une seconde crémaillère 62 complémentaire de la première crémaillère. Chacune des première et seconde crémaillères 62 est munie de crans 621 agencés pour s'imbriquer et pour définir une pluralité de positions de réglage de la butée 6 en fonction des longueurs de bûche B à couper. La plaque 61 est perpendiculaire à l'axe de la première crémaillère et de la seconde crémaillère 62 et est prolongée par le levier 611 pivotant. La figure 3A montre la butée réglable 6 dans une position déverrouillée dans laquelle le levier 611 est remonté pour dégager les crans 621 de la première crémaillère 62 et de la seconde crémaillère 62. Dans cette configuration, la butée réglable 6 est libre et peut être déplacée en translation le long de la seconde crémaillère 62. Il en résulte que la position de la butée réglable 6 peut être ajustée par l'opérateur posté devant la scie 1 en fonction de la longueur des bûches B à couper. La figure 3B montre la butée réglable 6 dans une position verrouillée dans laquelle le levier 611 est abaissé et les crans 621 des première et seconde crémaillères 62 sont imbriqués. En effet, en abaissant le levier 611 au-delà de son axe de pivotement, il exerce une pression sur la partie mobile en direction de la partie fixe. Dans cette configuration, la butée réglable 6 est verrouillée et bloquée en position et la résistance aux chocs est garantie. Cette butée réglable 6 se déplace le long d'une échelle graduée 63 dont les valeurs correspondent aux longueurs de coupe des buches B, comme l'illustre la figure 1.

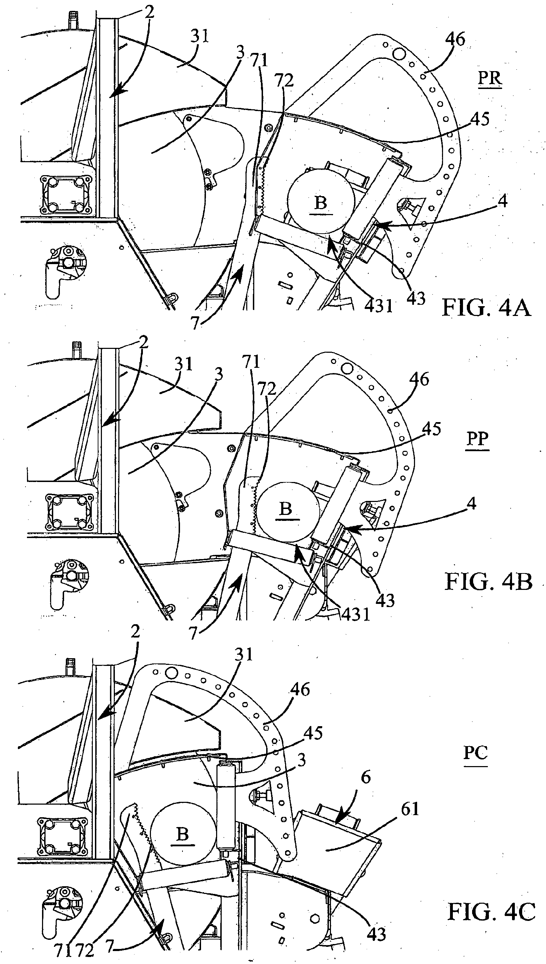

Les figures 4A à 4C illustrent les positions de repos PR, de pivotement PP et de coupe PC du chevalet 4 de la scie 1. En position de repos PR, le chevalet 4 est incliné d'un angle par rapport à la verticale pour que celui-ci soit éloigné de la lame de scie 3. Puis, la bûche B est disposée dans le berceau 43 du chevalet 4 par la zone de réception 431 et descend le long du berceau 43 jusqu'à atteindre la butée réglable 6. La buche B est maintenue au repos par la butée réglable 6 qui évite que la buche B ne glisse le long du berceau 43 incliné d'un angle A1 par rapport à l'horizontal. En effet, la butée réglable 6 est disposée en face de la zone d'évacuation 432. Il en résulte que la butée réglable 6 est située contre l'extrémité arrière de la bûche B et évite sa chute par gravité. En outre, un organe de blocage 7 est disposé dans la zone de réception 431 du chevalet 4 et est indépendant du chevalet 4. Cet organe de blocage 7 comporte un bras pivotant 71 autour d'un axe de pivotement (non représenté) solidaire du châssis 2 par des moyens de rappel (non représenté). L'extrémité libre du bras pivotant 71 comporte une pluralité de dents 72 agencés pour mordre la buche B dans le berceau 43. En position de pivotement PP le bras pivotant 71 entre en contact avec la buche B ce qui entraîne le pivotement du bras pivotant 71. Les moyens de rappel permettent de maintenir le bras pivotant 71 en appui sur la buche B en position de pivotement PP et de coupe PC. Il n'est pas en contact avec la buche B lorsque le chevalet 4 est en position de repos PR car il est éloigné de celui-ci. En outre, lors du retour de là position de coupe PC vers la position de repos PR, le bras pivotant 71 est ramené à sa position initiale grâce aux moyens de rappel.

En position de pivotement PP, l'opérateur pivote le chevalet 4 en le poussant en direction de la lame de scie 3 à l'aide de la poignée 46. Le chevalet 4 oscille dans le premier sens de rotation sous l'action de la force exercée par l'opérateur. L'organe de blocage 7 entre en contact avec la buche B lors du pivotement du chevalet 4. Cet organe de blocage 7 permet à la fois de maintenir la bûche dans le berceau 43 sans qu'elle ne glisse et d'éviter la rotation de la buche B pendant l'opération de coupe lorsque le chevalet 4 est en position de coupe.

En position de coupe PC, le chevalet 4 est complètement pivoté en direction de la lame de scie 3. La buche B maintenue par l'organe de blocage 7 est rapprochée et découpée par la lame de scie 3. La partie découpée de la bûche B située dans la zone d'évacuation 432 du chevalet 4 est évacuée automatiquement par gravité en aval du chevalet 4, tandis que la partie restante de la bûche B est toujours maintenue par l'organe de blocage 7.

Lors du retour du chevalet 4 en position de repos PR, l'organe de blocage 7 s'éloigne de la partie restante de la buche B. Le chevalet 4 oscille dans le second sens de rotation sous l'action des moyens de rappel. Il en résulte que la partie restante de la bûche B glisse automatiquement le long du berceau 43 jusqu'à entrer en contact avec la butée réglable 6. On réitère alors l'opération de coupe sans avoir besoin de déplacer la partie restante de la bûche B manuellement.

Il résulte de la combinaison du chevalet 4 incliné, de la butée réglable 6 et de l'organe de blocage 7 que l'évacuation de la partie découpée de la bûche B s'effectue automatiquement sans intervention manuelle, et que la partie restante de la bûche B se repositionne automatiquement pour une coupe ultérieure ou pour être également évacuée. Ces opérations d'évacuation et de repositionnement automatiques sont réalisées par gravité et par translation le long de la pente descendante du chevalet 4. Il en résulte que l'opérateur n'a plus besoin de manipuler la bûche B pendant ces opérations d'évacuation et de repositionnement ce qui présente un avantage en termes de sécurité de l'opérateur et de gain de temps. Cette configuration permet de rendre le capot supérieur 45 du chevalet 4 fixe afin de garantir encore plus la sécurité de l'opérateur qui n'a plus besoin de lever puis d'abaisser le capot à chaque manipulation de bûche. Comme on l'a vu le basculement du chevalet 4 est généré manuellement par l'opérateur mais pourrait être généré automatiquement par un actionneur commandé par l'opérateur.

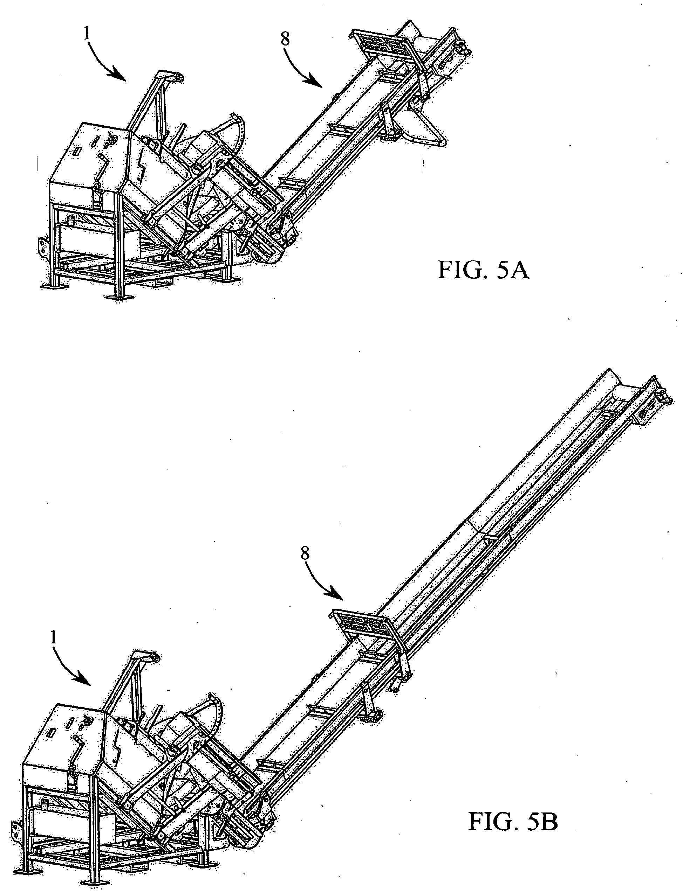

Bien entendu, la scie 1 telle que décrite peut être combinée à un convoyeur d'évacuation 8 automatique des bûches B de bois après la coupe ou tout autre moyen permettant de dégager les bûches B coupées en direction d'une zone de stockage, d'une benne, d'une palette de transport ou tout autre moyen selon les besoins et comme l'illustre les figures 5A et 5B.

### Possibilités d'application industrielle :

Il ressort clairement de cette description que l'invention permet d'atteindre les buts fixés, à savoir proposer une scie circulaire répondant aux normes de sécurité en vigueur et permettant de s'affranchir d'opérations manuelles à risques, tout en augmentant la cadence de coupe et les conditions de travail de l'opérateur, réduisant la pénibilité.

## Revendications

1. Scie circulaire à chevalet (1) pour tronçonner des bûches (B) de bois comportant un châssis (2) comportant une lame de scie (3) circulaire et un chevalet (4) comportant une zone de réception (431) et une zone d'évacuation (432) respectivement en amont et en aval de ladite lame de scie (3), ladite lame de scie (3) étant perpendiculaire audit chevalet (4), et ledit chevalet (4) étant monté oscillant par rapport audit châssis (2) autour d'un axe de pivotement (44) pour pivoter alternativement entre au moins une position de repos (PR) dans laquelle il est éloigné de ladite lame de scie (3) et une position de coupe (PC) dans laquelle il est rapproché de ladite lame de scie (3), **caractérisée en ce que** ledit chevalet (4) est incliné d'un premier angle (A1) par rapport à l'horizontale de sorte que le niveau de la zone d'évacuation (432) soit inférieur au niveau de la zone de réception (431), **en ce que** ladite lame de scie (3) est inclinée d'un second angle (A2) par rapport à la verticale, les premier et second angles (A1 et A2) étant égaux et dans le même sens, **en ce que** ladite scie circulaire à chevalet (1) comporte une butée (6) réglable disposée sur ledit châssis (2) en aval dudit chevalet (4) et agencée pour retentir les bûches (B) dans le chevalet (4) lorsqu'il est en position de repos (PR), et **en ce que** ladite scie circulaire à chevalet (1) comporte un organe de blocage (7) mobile par rapport audit chevalet (4) agencé pour maintenir les bûches (B) dans le chevalet (4) lorsqu'il est en position de coupe (PC).

2. Scie selon la revendication 1, **caractérisée en ce que** ledit premier ou second angle (A1, A2) est compris entre 35 degrés et 45 degrés, de préférence égal à 40 degrés.

3. Scie selon la revendication 1, **caractérisée en ce que** la butée (6) réglable comporte une partie fixe solidaire du châssis (2) et une partie mobile en translation par rapport à la partie fixe et formant butée pour ajuster la position longitudinale de ladite butée (6) réglable en fonction de la longueur de coupe souhaitée.

4. Scie selon la revendication 3, **caractérisée en ce que** la partie fixe comporte une seconde crémaillère (62) munie d'une pluralité de crans (621) et **en ce que** la partie mobile comporte une plaque (61) formant butée et une première crémaillère munie d'une pluralité de crans, la dite partie mobile étant munie d'un levier (611) pivotant entre une position verrouillée dans laquelle le levier (611) engrène les crans (621) des première et seconde crémaillères (62) bloquant la butée (6) dans une position longitudinale, et une position déverrouillée dans laquelle le levier (611) dégage les crans (621) des première et seconde crémaillères (62) autorisant le déplacement de la butée (6).

5. Scie selon la revendication 1, **caractérisé en ce que** l'organe de blocage (7) comporte un bras pivotant (71) dont l'extrémité comporte des dents (72) et est indépendant du chevalet (4) et est disposé dans la zone de réception (431) du chevalet (4).

6. Scie selon la revendication 1, **caractérisé en ce qu'**elle comporte un guide longitudinal (5) disposé dans le prolongement longitudinal de la zone d'évacuation (432) du chevalet (4) et ajustable en longueur en fonction de la longueur de coupe souhaitée.

7. Scie selon la revendication 6, **caractérisé en ce que** le guide longitudinal (5) comporte une partie fixe (51) solidaire du châssis (2) et une partie mobile (52) pouvant coulisser dans la partie fixe (51) et reliées entre elles par une molette de réglage (53).

8. Scie selon la revendication 1, **caractérisé en ce qu'**elle comporte au moins un convoyeur d'évacuation (8) disposé en aval de la zone d'évacuation (432) du chevalet (4).

9. Scie selon la revendication 1, **caractérisé en ce que** le chevalet (4) comporte un capot supérieur (45) fixe.

## Patentansprüche

1. Kreissäge (1) mit Sägebock zum Sägen von Holzscheiten (B) bestehend aus einem Gestell (2) mit einem Kreissägeblatt (3) und einem Sägebock (4) mit einem Aufnahmebereich (431) und einem Austragsbereich (432), die vor bzw. nach besagtem Sägeblatt (3) angeordnet sind, wobei besagtes Sägeblatt (3) senkrecht zu besagtem Sägebock (4) angeordnet ist und besagter Sägebock (4) in Bezug auf besagtes Gestell (2) um eine Drehachse (44) schwenkbar montiert ist, um abwechselnd zumindest zwischen einer Ruhestellung (PR), in der er von besagtem Sägeblatt (3) entfernt ist, und einer Schneidstellung (PC), in der er sich in der Nähe von besagtem Sägeblatt (3) befindet, zu schwenken, **dadurch gekennzeichnet, dass** besagter Sägebock (4) in Bezug auf die Horizontale um einen ersten Winkel (A1) geneigt ist, so dass das Niveau von Austragsbereich (432) niedriger ist, als das Niveau von Aufnahmebereich (431), dadurch, dass besagtes Sägeblatt (3) in Bezug auf die Vertikale um einen zweiten Winkel (A2) geneigt ist, wobei der erste und der zweite Winkel (A1 und A2) gleich und in die selbe Richtung geneigt sind, dadurch, dass besagte Kreissäge (1) mit Sägebock einen verstellbaren Anschlag (6) beträgt, der auf besagtem Gestell (2) nach besagtem Sägebock (4) angeordnet ist und ausgelegt ist, um die Scheite (B) im Sägebock (4) zu halten wenn dieser sich in Ruhestellung (PR) befindet, und dadurch, dass besagte Kreissäge (1) mit Sägebock ein in Bezug auf besagten Sägebock (4) bewegliches Blockierelement (7) beträgt, das ausgelegt ist, um die Scheite (B) im Sägebock (4) festzuhalten wenn dieser sich in Schneidstellung (PC) befindet.

2. Säge nach Anspruch 1, **dadurch gekennzeichnet, dass** besagter erster oder zweiter Winkel (A1, A2) sich zwischen 35 Grad und 45 Grad befindet, und vorzugsweise gleich 40 Grad ist.

3. Säge nach Anspruch 1, **dadurch gekennzeichnet, dass** der verstellbare Anschlag (6) einen festen, am Gestell (2) befestigten Teil und einen in Bezug auf den festen Teil translationsbeweglichen Teil beträgt, der einen Anschlag bildet, um die Längsstellung von besagtem verstellbaren Anschlag (6) je nach gewünschter Schnittlänge einzustellen.

4. Säge nach Anspruch 3, **dadurch gekennzeichnet, dass** der feste Teil eine zweite, mit einer Vielzahl Kerben (621) versehene Zahnstange (62) beträgt, und dadurch, dass der bewegliche Teil eine Platte (61), die einen Anschlag bildet, und eine erste mit einer Vielzahl Kerben versehene Zahnstange beträgt, wobei besagter beweglicher Teil mit einem Hebel (611) versehen ist, der zwischen einer verriegelten Stellung, in der der Hebel (611) in die Kerben (621) der ersten und der zweiten (62) Zahnstange greift und den Anschlag (6) in einer Längsstellung blockiert, und einer entriegelten Stellung, in der der Hebel (611) die Kerben (621) der ersten und der zweiten (62) Zahnstange freisetzt und die Bewegung des Anschlags (6) erlaubt, schwenkbar ist.

5. Säge nach Anspruch 1, **dadurch gekennzeichnet, dass** Blockierelement (7) einen Schwenkarm (71) beträgt, dessen Ende Zähne (72) beträgt und vom Sägebock (4) unabhängig ist, und im Aufnahmebereich (431) von Sägebock (4) angeordnet ist.

6. Säge nach Anspruch 1, **dadurch gekennzeichnet, dass** sie eine Längsführung (5) beträgt, die in der längsseitigen Verlängerung des Austragsbereichs (432) von Sägebock (4) angeordnet ist und je nach gewünschter Schnittlänge in Längsrichtung verstellbar ist.

7. Säge nach Anspruch 6, **dadurch gekennzeichnet, dass** die Längsführung (5) einen festen, am Gestell (2) befestigten Teil (51) und einen beweglichen Teil (52), der in festem Teil (51) gleiten kann, beträgt, die mittels eines Einstellrads (53) miteinander verbunden sind.

8. Säge nach Anspruch 1, **dadurch gekennzeichnet, dass** sie zumindest einen nach dem Austragsbereich (432) von Sägebock (4) angeordneten Austragsförderer (8) beträgt.

9. Säge nach Anspruch 1, **dadurch gekennzeichnet, dass** der Sägebock (4) eine feste obere Abdeckung (45) beträgt.

## Claims

1. Circular saw with bench (1) for cutting wood logs (B) comprising a frame (2) comprising a circular saw blade (3) and a bench (4) comprising a receiving area (431) and an evacuation area (432) respectively upstream and downstream of said saw blade (3), said saw blade (3) being perpendicular to said bench (4), and said bench (4) being pivotably mounted with respect to said frame (2) about a pivot axis (44) so as to pivot alternately between at least one resting position (PR) where it is distant from said saw blade (3) and a cutting position (PC) where it is close to said saw blade (3), **characterized in that** said bench (4) is inclined by a first angle (A1) with respect to the horizontal so that the level of evacuation area (432) is lower than the level of receiving area (431), **in that** said saw blade (3) is inclined by a second angle (A2) with respect to the vertical, the first and second angles (A1 and A2) being equal and in the same direction, **in that** said circular saw with bench (1) comprises an adjustable stop (6) mounted on said frame (2) downstream of said bench (4) and arranged to hold logs (B) in bench (4) when it is in resting position (PR), and **in that** said circular saw with bench (1) includes a locking member (7) movable with respect to said bench (4) and arranged to hold logs (B) in bench (4) when it is in cutting position (PC).

2. Saw according to claim 1, **characterized in that** said first or second angle (A1, A2) is included between 35 degrees and 45 degrees, preferably equal to 40 degrees.

3. Saw according to claim 1, **characterized in that** the adjustable stop (6) comprises a fixed part rigidly fixed to frame (2) and a part movable in translation with respect to the fixed part and forming a stop for adjusting the longitudinal position of said adjustable stop (6) according to the desired cutting length.

4. Saw according to claim 3, **characterized in that** the fixed part comprises a second rack (62) provided with a plurality of notches (621) and **in that** the movable part comprises a plate (61) forming a stop and a first rack provided with a plurality of notches, said movable part being provided with a lever (611) pivoting between a locked position in which lever (611) is engaged in notches (621) of first and second racks (62), locking stop (6) in a longitudinal position, and an unlocked position in which lever (611) releases notches (621) of first and second racks (62), allowing stop (6) to move.

5. Saw according to claim 1, **characterized in that** locking member (7) comprises a pivoting arm (71) whose end is provided with teeth (72) and is independent of bench (4) and is arranged in receiving area (431) of bench (4).

6. Saw according to claim 1, **characterized in that** it comprises a longitudinal guide (5) arranged in the longitudinal extension of evacuation area (432) of bench (4) and adjustable in length according to the desired cutting length.

7. Saw according to claim 6, **characterized in that** longitudinal guide (5) comprises a fixed (51) part rigidly fixed to frame (2) and a movable part (52) that can slide in fixed part (51) and connected with each other by means of an adjustment wheel (53).

8. Saw according to claim 1, **characterized in that** it comprises at least one evacuation conveyor (8) arranged downstream of evacuation area (432) of bench (4).

9. Saw according to claim 1, **characterized in that** bench (4) comprises a fixed top cover (45).
